# EUROPEAN PATENT SPECIFICATION

(11) **EP 4 398 600 B1**
(45) Date of publication and mention of the grant of the patent: **19.08.2026**
(21) Application number: 22864694.9
(22) Date of filing: 01.09.2022
(51) Int. Cl.: H04R 3/00, H04R 17/00, A61B 8/00, G01N 29/22, G01S 7/526, B06B 1/02

(54) **ULTRASONIC TRANSDUCER AND ULTRASONIC INSPECTION SYSTEM**
ULTRASCHALLWANDLER UND ULTRASCHALLPRÜFSYSTEM
TRANSDUCTEUR ULTRASONORE ET SYSTÈME D'INSPECTION ULTRASONORE

(30) Priority: 02.09.2021 JP 2021143298
(43) Date of publication of application: 10.07.2024
(73) Proprietor: Toray Engineering Co., Ltd., Tokyo 103-0028 (JP); Toray Engineering D Solutions Co., Ltd., Tokyo 103-0028 (JP)
(72) Inventor: ONODERA, Akira, Otsu-shi, Shiga 520-2141 (JP); TATSUGUCHI, Koji, Otsu-shi, Shiga 520-2141 (JP)
(74) Representative: Kraus & Lederer PartGmbB
(86) International application number: PCT/JP2022/032987
(87) International publication number: WO 2023/033112

(56) References cited:
- WO-A1-2014/171219
- JP-A- 2001 086 587
- JP-A- 2014 212 413
- JP-A- 2020 500 048
- JP-A- 2021 019 927
- US-A- 5 269 189

## Description

### Technical Field

The present invention relates to an ultrasonic transducer and an ultrasonic inspection system, in particular to an ultrasonic transducer and an ultrasonic inspection system including a piezoelectric element.

### Background Art

Ultrasonic transducers including piezoelectric elements are known in the art. Such an ultrasonic transducer is disclosed in Japanese Patent Publication No. JP 6259584, for example.

The ultrasonic transducer disclosed in the above Japanese Patent Publication No. JP 6259584 includes a piezoelectric element. The piezoelectric element is configured to produce ultrasonic waves, and to receive waves reflected from an object to be inspected (inspection target) and outputs the waves. In addition, the ultrasonic transducer disclosed in the above Japanese Patent Publication No. JP 6259584 includes an inductor and two resistor elements. In the ultrasonic transducer, a constant-resistance circuit is composed of the piezoelectric element, the inductor, and the two resistor elements.

### Prior Art

### Patent Document

Patent Document 1: Japanese Patent Publication No. JP 6259584

### Summary of the Invention

### Problems to be Solved by the Invention

Although not stated in the above Japanese Patent Publication **No.** JP 6259584, pulse waves for oscillating the piezoelectric element are input through a transmission path such as a coaxial cable in the ultrasonic transducer disclosed in the above Japanese Patent Publication **No.** JP 6259584. Signals that are output based on the reflected waves received by the piezoelectric element are output through the same transmission path as the input. Accordingly, both the input signals that are input to the piezoelectric element and the output signals that are output from the piezoelectric element are input and output through the inductor and the two resistor elements, which compose the constant-resistance circuit. As a result, insertion loss corresponding to two processes, which are the input and the output, occurs in the inductor and the two resistor elements, which compose the constant-resistance circuit. The insertion loss corresponding to two processes reduces intensity of detection signals output from the ultrasonic transducer. For this reason, it is desired to suppress the reduction of the intensity of the detection signals even in a case in which such a constant-resistance circuit is provided for impedance matching.

The present invention is intended to solve the above problem, and one object of the present invention is to provide an ultrasonic transducer and an ultrasonic inspection system capable of suppressing reduction of intensity of detection signals even in a case in which a constant-resistance circuit is provided for impedance matching.

### Means for Solving the Problems

In order to attain the aforementioned object, an ultrasonic transducer system according to a first aspect of the present invention includes a piezoelectric element configured to produce ultrasonic waves based on input waves input from an ultrasonic transceiver and to output detection signals to the ultrasonic transceiver by detecting the waves reflected from an inspection target; a parallel circuit including a resistor element and an inductor connected in parallel to each other, and connected to an input side of the piezoelectric element, wherein at least the piezoelectric element and the parallel circuit form a constant-resistance circuit, and the ultrasonic waves are produced in response to the input waves that are input from the ultrasonic transceiver through an input transmission path to the piezoelectric element through the parallel circuit, and the detection signals are output from the piezoelectric element to the ultrasonic transceiver through an output transmission path that is different from the input transmission path without passing through the parallel circuit.

As discussed above, the ultrasonic transducer according to the first aspect is configured to produce the ultrasonic waves in response to the input waves that are input from the ultrasonic transceiver through the input transmission path to the piezoelectric element through the parallel circuit. In addition, the ultrasonic transducer is configured to output the detection signals from the piezoelectric element to the ultrasonic transceiver through an output transmission path that is different from the input transmission path without passing the detection signals through the parallel circuit. Accordingly, the input waves can be input to the piezoelectric element through the parallel circuit, which is included in the constant-resistance circuit for impedance matching, while the detection signals can be output without passing through the parallel circuit, which includes the resistor element and the inductor. For this reason, as compared with a case in which signals are transmitted and received through a parallel circuit both in input and output of the signals, insertion loss occurs only in the input of the signals so that reduction of intensity of the output detection signals can be suppressed. Consequently, it is possible to suppress the reduction of the intensity of the detection signals even in a case in which the constant-resistance circuit is provided for impedance matching.

In the ultrasonic transducer according to the first aspect, it is preferable that a cut-off circuit connected between the piezoelectric element and the parallel circuit is further provided; and that the cut-off circuit is configured to pass the input waves through the parallel circuit so as to input the input waves from the ultrasonic transceiver to the piezoelectric element, and to cut off the detection signals so as to output the detection signals from the piezoelectric element to the ultrasonic transceiver without passing the detection signals through the parallel circuit. According to this configuration, the detection signals from the piezoelectric element can be output without passing through the parallel circuit, which is included in the constant-resistance circuit, by cutting off the detection signals that pass through the constant-resistance circuit by using the cut-off circuit, and as a result it is possible to easily suppress the reduction of the intensity of the detection signals that are output from the piezoelectric element.

In this configuration, it is preferable that the cut-off circuit includes a pair of diodes connected in parallel to each other with polarities of the diodes being opposite to each other; and that forward voltages of the pair of diodes are substantially equal to each other in magnitude. According to this configuration, when a voltage greater than the forward voltage is applied, the detection signals can pass through the cut-off circuit, while when a voltage smaller than the forward voltage is applied, the detection signals can be cut off by the cut-off circuit irrespective of a polarity of the voltage. As a result, the pair of diodes pass the input waves that have a voltage value greater than the forward voltage to the piezoelectric element, and can cut off the detection signals that have a voltage value smaller than the forward voltage. Consequently, because the detection signals from the piezoelectric element can be output so as to output the detection signals only through the output transmission path without influence of the parallel circuit, which is included in the constant-resistance circuit, by a simple configuration of the pair of diodes without using a structure for switching between passage and cutoff statuses of the cut-off circuit such as a switching circuit, it is possible to more easily suppress the reduction of the intensity of the detection signals that are output from the piezoelectric element.

In the ultrasonic transducer according to the first aspect, it is preferable that the piezoelectric element is connected in parallel to a termination resistor that is provided on the ultrasonic transceiver side for impedance matching for the output transmission path, and is configured to output the detection signals to the ultrasonic transceiver through the output transmission path; and that a product of an impedance of the piezoelectric element and an impedance of the inductor in the parallel circuit is substantially equal to a square of a characteristic impedance of the input transmission path. According to this configuration, the constant-resistance circuit can be constructed of the resistor element and the inductor of the parallel circuit, the piezoelectric element, and the termination resistor of the output transmission path in transmission of ultrasonic waves (in the input of the detection signals), while the detection signals can be output through the output transmission path terminated by the termination resistor without passing through the parallel circuit, which includes the resistor element and the inductor, in reception of ultrasonic waves (in the output of the detection signals). According to this configuration, the resistor and the inductor of the parallel circuit, the piezoelectric element, and the termination resistor of the output transmission path can be used for impedance matching both in the input and the output of the detection signals. Consequently, the reduction of the intensity of the detection signals can be suppressed by outputting the detection signals without passing the detection signals through the parallel circuit while performing impedance matching both in the input and the output of the detection signals.

In the ultrasonic transducer according to the first aspect, it is preferable that the piezoelectric element is configured to output the detection signals to the ultrasonic transceiver through the output transmission path a characteristic impedance of which is substantially equal to a characteristic impedance of the input transmission path in magnitude; and that the constant-resistance circuit, which is formed of at least the piezoelectric element and the parallel circuit, has a combined impedance substantially equal to the characteristic impedance of the input transmission path. According to this configuration, because the characteristic impedance of the input transmission path is substantially equal to the characteristic impedance of the output transmission path in magnitude, the input transmission path and the output transmission path can be constructed of a common type of coaxial cable, etc. Accordingly, the input and output transmission paths to be connected to the ultrasonic transducer can be easily maintained and preserved. Also, in this configuration in which the constant-resistance circuit is constructed of the termination resistor provided for impedance matching for the output transmission path together with the parallel circuit and the piezoelectric element, because the characteristic impedance of the input transmission path is substantially equal to the characteristic impedance of the output transmission path in magnitude, the constant-resistance circuit for impedance matching for the input transmission path can be easily provided.

In the ultrasonic transducer according to the first aspect, it is preferable that a combining resistor element included in the constant-resistance circuit in addition to the piezoelectric element and the parallel circuit, and connected in parallel to the piezoelectric element is further provided; that the piezoelectric element is configured to output the detection signals to the ultrasonic transceiver through the output transmission path a characteristic impedance of which is greater than a characteristic impedance of the input transmission path; and that the constant-resistance circuit, which includes the piezoelectric element, the parallel circuit and the combining resistor, has a combined impedance substantially equal to the characteristic impedance of the input transmission path. According to this configuration, the constant-resistance circuit constructed of the piezoelectric element, the parallel circuit and the combining resistor element can perform impedance matching in transmission of ultrasonic waves (in the input of the detection signals), while the detection signals can be output through the output transmission path having a characteristic impedance greater than the input transmission path without passing through the parallel circuit in reception of ultrasonic waves (in the output of the detection signals). Accordingly, in addition to an advantage in which insertion loss occurs only in the input of the signals in the parallel circuit, the reduction of the intensity of the detection signals from the piezoelectric element caused by the output transmission path can be suppressed by the characteristic impedance of the output transmission path greater than the input transmission path. Consequently, because detection sensitivity of the detection signals from the piezoelectric element can be further increased, it is possible to further suppress the reduction of the intensity of the detection signals.

In the ultrasonic transducer according to the first aspect, it is preferable that a plurality of piezoelectric elements are provided as the piezoelectric element; a plurality of parallel circuits are provided as the parallel circuit so that the plurality of parallel circuits are connected to input sides of the plurality of piezoelectric elements one by one; and that the ultrasonic waves are produced in response to the input waves that are input from the ultrasonic transceiver through each of a plurality of input transmission paths that are provided as the input transmission path and correspond to the plurality of piezoelectric elements to corresponding one of the plurality of piezoelectric elements through each of the plurality of parallel circuits, and the detection signals are output from the corresponding one of the plurality of piezoelectric elements to the ultrasonic transceiver through each of a plurality of output transmission paths that are provided as the output transmission path and correspond to the plurality of piezoelectric elements without passing the detection signals through corresponding one of the plurality of parallel circuits. According to this configuration, even in a case in which a plurality of piezoelectric elements are provided, the input waves can be input to the piezoelectric element through each of the parallel circuits, which are included in the constant-resistance circuits for impedance matching, while the detection signals from each of the plurality of piezoelectric elements can be output without passing through the parallel circuit, which includes the resistor element and the inductor. Consequently, a wide area of the inspection target can be collectively inspected by the plurality of piezoelectric elements provided, and the reduction of the intensity of the detection signals output from each of the plurality of piezoelectric elements can be suppressed.

An ultrasonic inspection system according to a second aspect of the present invention includes an ultrasonic transducer that includes a piezoelectric element configured to produce ultrasonic waves based on input waves input to the piezoelectric element, and to output detection signals by detecting the waves reflected from an inspection target; an input transmission path configured to transmit the input waves to the ultrasonic transducer; an output transmission path provided separately from the input transmission path, and configured to output the detection signals output from the ultrasonic transducer; and an ultrasonic transceiver configured to output the input waves to the ultrasonic transducer through the input transmission path, and to acquire the detection signals from the ultrasonic transducer through the output transmission path, wherein a constant-resistance circuit is formed of at least the piezoelectric element of the ultrasonic transducer, and a parallel circuit that includes a resistor element and an inductor connected in parallel to each other and is connected to an input side of the piezoelectric element; and the ultrasonic transducer is configured to produce the ultrasonic waves in response to the input waves that are input from the ultrasonic transceiver through the input transmission path to the piezoelectric element through the parallel circuit, and to output the detection signals from the piezoelectric element to the ultrasonic transceiver through the output transmission path, which is different from the input transmission path, without passing the detection signals through the parallel circuit.

As discussed above, the ultrasonic inspection system according to the second aspect is configured to produce the ultrasonic waves in response to the input waves that are input from the ultrasonic transceiver through the input transmission path to the piezoelectric element through the parallel circuit. In addition, the ultrasonic inspection system is configured to output the detection signals from the piezoelectric element to the ultrasonic transceiver through an output transmission path that is different from the input transmission path without passing the detection signals through the parallel circuit. Accordingly, the input waves can be input to the piezoelectric element through the parallel circuit, which is included in the constant-resistance circuit for impedance matching, while the detection signals can be output without passing through the parallel circuit, which includes the resistor element and the inductor. For this reason, as compared with a case in which signals are transmitted and received through a parallel circuit both in input and output of the signals, insertion loss occurs only in the input of the signals so that reduction of intensity of the output detection signals can be suppressed. Consequently, it is possible to provide an ultrasonic inspection system capable of suppressing the reduction of the intensity of the detection signals even in a case in which the constant-resistance circuit is provided for impedance matching.

### Effect of the Invention

According to the present invention, as discussed above, it is possible to suppress reduction of intensity of detection signals even in a case in which a constant-resistance circuit is provided for impedance matching.

### Brief Description of the Drawings

FIG. 1 is a schematic diagram showing a configuration of an ultrasonic inspection system according to a first embodiment of the present invention.
FIG. 2 is a circuit diagram showing the ultrasonic inspection system according to the first embodiment.
FIG. 3 is a diagram showing a circuit equivalent to FIG. 2 in transmission of ultrasonic waves.
FIG. 4 is a diagram showing a circuit equivalent to FIG. 2 in reception of the ultrasonic waves.
FIG. 5 is a schematic diagram showing a configuration of an ultrasonic inspection system according to a second embodiment of the present invention.
FIG. 6 is a circuit diagram showing the ultrasonic inspection system according to the second embodiment.
FIG. 7 is a diagram showing a circuit equivalent to FIG. 6 in transmission of ultrasonic waves.
FIG. 8 is a schematic diagram showing a configuration of an ultrasonic inspection system according to a third embodiment of the present invention.
FIG. 9 is a circuit diagram showing the ultrasonic inspection system according to the third embodiment.
FIG. 10 is a schematic diagram showing a configuration of an ultrasonic transducer according to a modified example in first to third embodiments of the present invention.

### Modes for Carrying Out the Invention

Embodiments embodying the present invention will be described with reference to the drawings.

### [First Embodiment]

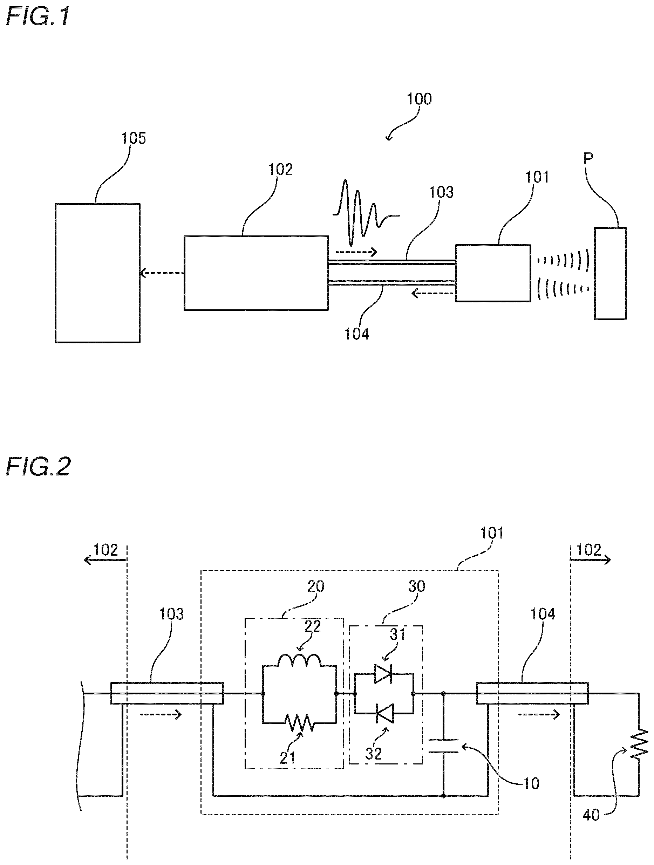

The following description describes configurations of an ultrasonic inspection system 100 and an ultrasonic transducer 101 according to a first embodiment with reference to FIGS. 1 to **4****.** In the ultrasonic inspection system 100, an inspection target P is inspected by emitting ultrasonic waves toward the inspection target P and detecting the waves that are reflected from the inspection target P. The ultrasonic inspection system 100 is used for ultrasonic diagnosis, non-destructive ultrasonic inspection, etc., for example.

As shown in FIG. 1, the ultrasonic inspection system 100 according to the first embodiment includes the ultrasonic transducer 101, a pulser receiver 102, a cable 103, a cable 104 and an analyzer 105. The pulser receiver 102 is an example of an "ultrasonic transceiver" in the claims. Also, the cable 103 and the cable 104 are an example of an "input transmission path" and an example of an "output transmission path", respectively, in the claims.

The pulser receiver 102 is configured to output (transmit) input waves (transmission pulses) to the ultrasonic transducer 101 through the cable 103. Also, the pulser receiver 102 is configured to acquire (receive) detection signals (reception pulses) from the ultrasonic transducer 101 through the cable 104. The pulser receiver 102 includes a transceiver circuit (not shown) including an amplifier, etc., and can amplify the detection signals and output the amplified detection signals to the analyzer 105. The analyzer 105 is configured to generate a test result of the inspection target P by analyzing the detection signals from the pulser receiver 102. For example, the analyzer 105 is a personal computer (PC) used by inspection operators who inspect the inspection target.

The cable 103 is a transmission path through which input waves are input from the pulser receiver 102 to the ultrasonic transducer 101. The cable 104 is a transmission path that is provided separately from the cable 103 and configured to output (receive) the detection signal from the ultrasonic transducer 101. For example, the cable 103 and the cable 104 are coaxial cables. Also, in the first embodiment, a characteristic impedance of the cable 103 is substantially equal to a characteristic impedance of the cable 104 in magnitude. For example, the cable 103 and the cable 104 have a characteristic impedance of approximately 50 [Ω].

As shown in FIG. 2, the ultrasonic transducer 101 includes a piezoelectric element 10, a parallel circuit 20, and a cut-off circuit 30. The ultrasonic transducer 101 includes connectors (not shown) through which the ultrasonic transducer is connected to the cables 103 and 104.

The piezoelectric element 10 is configured to produce ultrasonic waves in accordance with the input waves (transmission pulses) input from the pulser receiver 102. The piezoelectric element 10 is configured to output detection signals by detecting the reflection waves (ultrasonic echo) reflected from the inspection target P. Specifically, the piezoelectric element 10 has a structure in which a piezoelectric piece (piezoelectric material) is sandwiched between a pair of electrodes. The piezoelectric element 10 is configured to emit (produce) ultrasonic waves in response to an alternating voltage or pulse voltage that is applied as the input waves to the pair of electrodes. The piezoelectric element 10 is configured to output electrical signals as the detection signals in response to ultrasonic oscillation that propagates in the piezoelectric body. For example, the piezoelectric piece (piezoelectric material) is a polymeric material such as vinylidene fluoride-trifluoroethylene copolymer (P(VDF-TrFE)). In addition, the piezoelectric element 10 has a predetermined capacitance, and serves as an electrical element almost equivalent to a capacitor. In FIG. 2, the piezoelectric element 10 is shown as a capacitor.

The parallel circuit 20 includes a resistor element 21 and an inductor 22, which are connected in parallel to each other. The parallel circuit 20 is connected to an input side (cable 103 side) of the piezoelectric element 10. A resistance value of the resistor element 21 is approximately 50 [Ω], for example. In the ultrasonic transducer 101 according to the first embodiment, a constant-resistance circuit is constructed of at least the piezoelectric element 10 and the parallel circuit 20. The constant-resistance circuit will be described later.

The cut-off circuit 30 of the ultrasonic transducer 101 includes a pair of diodes 31 and 32. The cut-off circuit 30 is connected between the piezoelectric element 10 and the parallel circuit 20. The pair of diodes 31 and 32 are connected in parallel to each other with their polarities being opposite to each other. Specifically, an anode of the diode 31 is connected to the input side (cable 103 side), and a cathode of the diode 31 is connected an output side (cable 104 side). Contrary to the diode 31, an anode of the diode 32 is connected to the output side, and a cathode of the diode 32 is connected the input side.

### (Signal Paths in Transmission and Reception of Ultrasonic Waves)

The ultrasonic transducer 101 according to the first embodiment is configured to produce the ultrasonic waves in response to the input waves that are input from the pulser receiver 102 through the cable 103 to the piezoelectric element 10 through the parallel circuit 20 and the cut-off circuit **30.** In addition, the ultrasonic transducer 101 according to the first embodiment is configured to output the detection signals from the piezoelectric element 10 to the pulser receiver 102 through the cable 104, which is different from the cable 103, without passing the detection signals through the parallel circuit **20.**

Specifically, the cut-off circuit 30 of the ultrasonic transducer 101 is configured to pass the input waves from the pulser receiver 102 through the parallel circuit 20 so as to input the input waves to the piezoelectric element 10. Also, the cut-off circuit 30 is configured to prevent passage of the detection signals from the piezoelectric element 10 through the parallel circuit 20 so as to output the detection signals to the pulser receiver 102 without passing the detection signals through the parallel circuit **20.**

The diodes 31 and 32 are configured to flow (pass) a current to through the diodes 31 and 32 when a voltage greater than a predetermined forward voltage is applied to the diodes 31 and 32 in their forward direction (from the anode side to the cathode side). The forward voltages of the diodes 31 and 32 are much smaller than a voltage value of the input waves, and substantially equal to to each other in magnitude. In general, the voltage value of the detection signals output from the piezoelectric element 10 is still much smaller than the forward voltage. Accordingly, the diodes 31 and 32 are configured to pass the input waves through the diodes 31 and 32 when the input waves are input to the diodes 31 and 32, and cut off the detection signals when the detection signals are output to the diodes 31 and 32. Because, the diodes 31 and 32 are connected in parallel to each other with their polarities being opposite to each other, electric power can pass through the diodes 31 and 32 to the piezoelectric element 10 irrespective of a polarity of the input waves.

The piezoelectric element 10 is configured to transmit and receive ultrasonic waves of relatively high frequencies from several hundred kHz to several hundred MHz. Because the input waves transmitted to the piezoelectric element 10 has a pulse voltage or an alternating voltage having a high frequency component, in order to suppress loss of transmission to the piezoelectric element 10 even in a case of such a high frequency component, it is preferable that switching time (reverse recovery time) of the diodes 31 and 32 is as quick (short) as possible. Also, in order to improve sensitivity to the detection signals, it is preferable that terminal-to-terminal capacitances and series resistances of the diodes 31 and 32 are as small as possible.

In addition, a termination resistor 40 is provided on a pulser receiver 102 side. The termination resistor 40 is provided for impedance matching for the cable 104. That is, the termination resistor 40 has a resistance value substantially equal to the characteristic impedance of the cable 104 in magnitude. For example, in the case in which the characteristic impedance of the cable 104 is approximately 50 [Ω], the resistance value of the termination resistor 40 is approximately 50 [Ω]. In the first embodiment, the piezoelectric element 10 is connected in parallel to the termination resistor 40, and is configured to output the detection signals to the pulser receiver 102 through the cable 104.

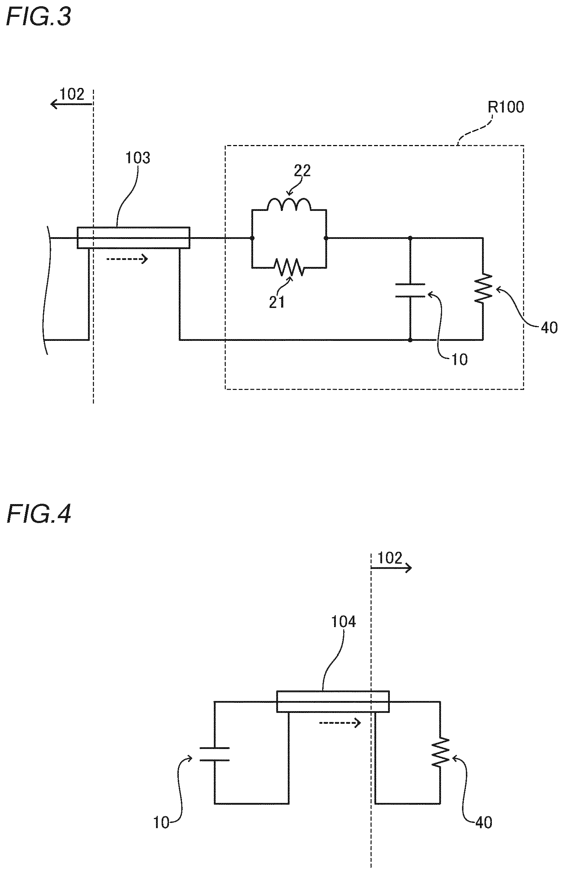

As shown in FIG. 3, in transmission of the ultrasonic waves (in input of the input waves), because the voltage value of the input waves is greater than the forward voltages of the diodes 31 and 32, a resistance (impedance) of the diodes 31 and 32 is extremely low. For this reason, the cut-off circuit 30 can be considered a conductor. The cable 104 is terminated by the termination resistor 40. Accordingly, because the output side is equivalent to a pure resistor that is the same as the termination resistor 40 and is connected to in parallel to the piezoelectric element 10 from the viewpoint of the ultrasonic transducer 101, an equivalent circuit to FIG. 2 in the transmission of the ultrasonic waves can be represented by a circuit shown in FIG. **3****.**

In the first embodiment, the constant-resistance circuit is constructed of the piezoelectric element 10, the resistor element 21 and the inductor 22 of the parallel circuit 20, and an output impedance (termination resistor 40). Here, the "output impedance" refers to impedance (the impedance of the termination resistor 40 and the cable 104) connected on the output side in parallel to the piezoelectric element 10 (capacitor). In the first embodiment, the output impedance is equivalent to the termination resistor 40 connected in parallel to the piezoelectric element as described above.

Specifically, in the first embodiment, the resistance value of the resistor element 21 of the parallel circuit 20 and the resistance value of the termination resistor 40 are substantially equal to the characteristic impedance of the cable 103 (approximately 50 Ω). In the first embodiment, a product Zc·Zl of an impedance Zc of the piezoelectric element 10 and an impedance Zl of the inductor 22 of the parallel circuit 20 is substantially equal to the square of the characteristic impedance of the cable 103. Accordingly, where a resistance value of each of the resistor element 21 and the termination resistor 40 **is R,** the product Zc·Zl of the impedance Zc of the piezoelectric element 10 and the impedance Zl of the inductor 22 is designed to be substantially equal to a product of the resistance value R of the resistor element 21 and the resistance value R of the termination resistor 40 (to satisfy a relation of Zc·Zl = R²).

If the relationship of Zc·Zl = R² is satisfied, the piezoelectric element 10, the parallel circuit 20 (resistor element 21 and inductor 22), and the termination resistor 40 form the constant-resistance circuit. A combined impedance of the constant-resistance circuit becomes R (50 [Ω]). The combined impedance of constant-resistance circuit is independent of frequencies, and as a result becomes equivalent to a pure resistor. Also, the piezoelectric element 10 and the inductor 22 of the parallel circuit 20 are said to be inverse in the resistance value R (50 Ω). Specifically, where a predetermined capacitance (capacitance) of the piezoelectric element 10 is C and an inductance of the inductor 22 is L, Zc and ZI are represented by Zc = 1/jωC and Zl = jωL, respectively. Here, ω = 2πf, and f is a frequency. Because Zc·Zl can be represented by Zc·Zl = L/C, if L/C = R² is satisfied, the constant-resistance circuit can be formed. For example, in a case in which the predetermine capacitance C of the piezoelectric element 10 is approximately 11 [pF] and the inductance L of the inductor 22 is approximately 27 [NH], the relation of L (27 [nH]) × 1/C (1/11 [pF]) ≈ 50 [Ω] × 50 [Ω] is satisfied. Accordingly, the constant-resistance circuit (a part R100 indicated by a dotted box in FIG. 3) can be formed in the ultrasonic transducer 101 by the resistor element 21 and the inductor 22, which are connected in parallel to each other, and the piezoelectric element 10 and the termination resistor 40, which are connected in parallel to each other, in the transmission of the ultrasonic waves. As a result, the combined impedance of the constant-resistance circuit becomes approximately 50 [Ω], which is substantially equal to the characteristic impedance of the cable 103.

Consequently, an ultrasonic transducer 101 side becomes substantially equivalent to a pure resistor of 50 [Ω] from the viewpoint of the pulser receiver 102 side (cable 103 side). In other words, the ultrasonic inspection system 100 is configured to input the input waves to the ultrasonic transducer 101 through the cable 103 while impedance matching for the cable 103 is performed.

In reception of ultrasonic waves (in the output of the detection signals), an electromotive force from the piezoelectric element 10 produced by the reflected wave (ultrasonic echo) is small. In a case in which voltages of the detection signals from the piezoelectric element 10 are smaller than the forward voltages of the diodes 31 and 32, the resistance (impedance) of the diodes 31 and 32 is extremely large. For this reason, as discussed above, the detection signals are cut off by the cut-off circuit 30 so that a part provided on the input side with respect to the cut-off circuit 30 is electrically separated. Accordingly, a circuit equivalent to the circuit of FIG. 2 in the reception of the ultrasonic waves can be represented by a circuit diagram shown in FIG. 4.

Consequently, as shown in FIG. 4, from the viewpoint of a piezoelectric element 10 side, the pulser receiver 102 side is equivalent to the circuit that includes a pure resistor of 50 Ω (termination resistor 40) connected to the piezoelectric element 10 side. In other words, the ultrasonic inspection system 100 is configured to output the detection signals from the ultrasonic transducer 101 to the pulser receiver 102 without passing the detection signals through the parallel circuit 20 while impedance matching for the cable 104 is performed.

### [Advantages of First Embodiment]

In the ultrasonic inspection system 100 and the ultrasonic transducer 101 according to the first embodiment, the following advantages are obtained.

In the first embodiment, as described above, ultrasonic waves are produced in response to input waves that are input from the pulser receiver 102 (ultrasonic transceiver) through the cable 103 (input transmission path) to the piezoelectric element 10 through the parallel circuit 20. Also, detection signals are output from the piezoelectric element 10 to the pulser receiver 102 through the cable 104 (output transmission path), which is different from the cable 103, without passing through the parallel circuit 20. Accordingly, the input waves can be input to the piezoelectric element 10 through the parallel circuit 20, which is included in the constant-resistance circuit for impedance matching, while the detection signals can be output without passing through the parallel circuit 20, which includes the resistor element 21 and the inductor 22. For this reason, as compared with a case in which signals are transmitted and received through the parallel circuit 20 both in input and output of the signals, insertion loss occurs only in the input of the signals so that reduction of intensity of the output detection signals can be suppressed. Consequently, it is possible to suppress the reduction of the intensity of the detection signals even in a case in which the constant-resistance circuit is provided for impedance matching.

In addition, in the first embodiment, as described above, the cut-off circuit 30 connected between the piezoelectric element 10 and the parallel circuit 20 is provided, and the cut-off circuit 30 is configured to pass the input waves through the parallel circuit 20 so as to input the input waves from the pulser receiver 102 (ultrasonic transceiver) to the piezoelectric element 10, and to cut off the detection signals so as to output the detection signals from the piezoelectric element 10 to the pulser receiver 102 without the detection signals passing through the parallel circuit 20. Accordingly, the detection signals from the piezoelectric element 10 can be output without passing through the parallel circuit 20, which is included in the constant-resistance circuit, by cutting off the detection signals that pass through the constant-resistance circuit by using the cut-off circuit 30, and as a result it is possible to easily suppress the reduction of the intensity of the detection signals that are output from the piezoelectric element 10.

Also, in the first embodiment, as described above, the cut-off circuit 30 includes the pair of diodes 31 and 32 connected in parallel to each other with polarities of the diodes being opposite to each other, and forward voltages of the pair of diodes 31 and 32 are substantially equal to each other in magnitude. Accordingly, when a voltage greater than the forward voltage is applied, the detection signals can pass through the cut-off circuit 30, while when a voltage smaller than the forward voltage is applied, the detection signals can be cut off by the cut-off circuit 30 irrespective of a polarity of the voltage. As a result, the pair of diodes 31 and 32 pass the input waves that have a voltage value greater than the forward voltage to the piezoelectric element 10, and can cut off the detection signals that have a voltage value smaller than the forward voltage. Consequently, because the detection signals from the piezoelectric element 10 can be output so as to output the detection signals only through the cable 104 (output transmission path) without influence of the parallel circuit 20, which is included in the constant-resistance circuit, by a simple configuration of the pair of diodes 31 and 32 without using a structure for switching between passage and cutoff statuses of the cut-off circuit 30 such as a switching circuit, it is possible to more easily suppress the reduction of the intensity of the detection signals that are output from the piezoelectric element 10.

In the first embodiment, as described above, the piezoelectric element 10 is connected in parallel to the termination resistor 40, which is provided on the pulser receiver 102 (ultrasonic transceiver) side for impedance matching for the cable 104 (output transmission path), and is configured to output the detection signals to the pulser receiver 102 through the cable 104. In addition, a product of an impedance Zc of the piezoelectric element 10 and an impedance Zl of the inductor 22 of the parallel circuit 20 is substantially equal to the square of the characteristic impedance of the cable 103 (input transmission path). Accordingly, the constant-resistance circuit can be constructed of the resistor element 21 and the inductor 22 of the parallel circuit 20, the piezoelectric element 10, and the termination resistor 40 of the cable 104 in transmission of ultrasonic waves (in the input of the detection signals), while the detection signals can be output through the cable 104 terminated by the termination resistor 40 without passing through the parallel circuit 20, which includes the resistor element 21 and the inductor 22, in reception of ultrasonic waves (in the output of the detection signals). Accordingly, the resistor element 21 and the inductor 22 of the parallel circuit 20, the piezoelectric element 10, and the termination resistor 40 of the cable 104 can be used for impedance matching both in the input and the output of the detection signals. Consequently, the reduction of the intensity of the detection signals can be suppressed by outputting the detection signals without passing the detection signals through the parallel circuit 20 while performing impedance matching both in the input and the output of the detection signals.

In the first embodiment, as described above, the piezoelectric element 10 is configured to output the detection signals to the pulser receiver 102 (ultrasonic transceiver) through the cable 104 (output transmission path) a characteristic impedance of which is substantially equal to the characteristic impedance of the cable 103 (input transmission path) in magnitude. The constant-resistance circuit, which is formed of at least the piezoelectric element 10 and the parallel circuit 20, has a combined impedance substantially equal to the characteristic impedance of the cable 103. Accordingly, because the characteristic impedance of the cable 103 is substantially equal to the characteristic impedance of the cable 104 in magnitude, the cable 103 and the cable 104 can be constructed of a common type of coaxial cable, etc. Accordingly, the cable 103 and the cable 104 to be connected to the ultrasonic transducer can be easily maintained and preserved. Also, in this configuration in which the constant-resistance circuit is constructed of the termination resistor 40 provided for impedance matching for the cable 104 together with the parallel circuit 20 and the piezoelectric element 10, because the characteristic impedance of the cable 103 is substantially equal to the characteristic impedance of the cable 104 in magnitude, the constant-resistance circuit for impedance matching for the cable 103 can be easily provided.

### [Second Embodiment]

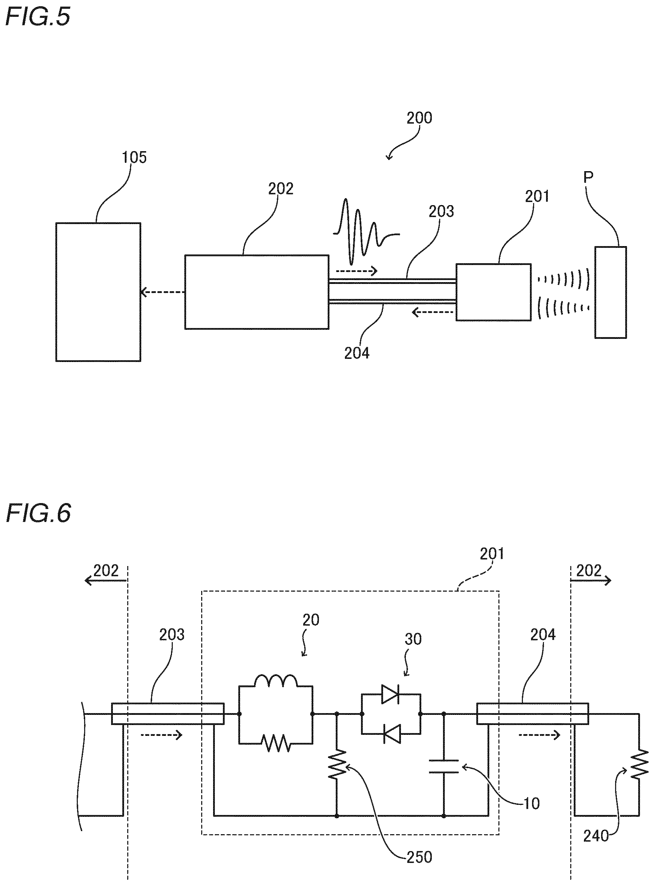

The following description describes configurations of an ultrasonic inspection system 200 and an ultrasonic transducer 201 according to a second embodiment with reference to FIGS. 5 to 7. In the second embodiment, dissimilar to the first embodiment in which characteristic impedances of the cables 103 and 104 are substantially equal to each other, characteristic impedances of cables 203 and 204 are different from each other. The same components as those of the first embodiment are denoted by the same reference numerals, and their description is omitted.

As shown in FIG. 5, the ultrasonic inspection system 200 according to the second embodiment includes an ultrasonic transducer 201, a pulser receiver 202, a cable 203, and a cable 204. The pulser receiver 202 is an example of an "ultrasonic transceiver" in the claims. Also, the cable 203 and the cable 204 are an example of an "input transmission path" and an example of an "output transmission path", respectively, in the claims.

For example, the cable 203 and the cable 204 are coaxial cables similar to the cable 103 and the cable 104 in the first embodiment. The cable 203 is a transmission path through which input waves are transmitted from the pulser receiver 202 to the ultrasonic transducer 201. The cable 204 is a transmission path that is provided separately from the cable 203 and configured to output (receive) the detection signal from the ultrasonic transducer 201. In the second embodiment, the characteristic impedance of the cable 204 is greater than the characteristic impedance of the cable 203. For example, the characteristic impedance of the cable 203 is approximately 50 [Ω]. The characteristic impedance of the cable 204 is approximately 75 [Ω].

The pulser receiver 202 is configured to output (transmit) input waves (transmission pulses) to the ultrasonic transducer 201 through the cable 203, and to acquire (receive) detection signals (reception pulses) from the ultrasonic transducer 201 through the cable 204 similar to the pulser receiver 102 in the first embodiment. The pulser receiver 202 is configured to output the amplified detection signals to the analyzer 105.

As shown in FIG. 6, the pulser receiver 202 includes a termination resistor 240. The termination resistor 240 is provided for impedance matching between the cable 204 and the pulser receiver 202 similar to the termination resistor 40 in the first embodiment. That is, the termination resistor 240 has a resistance value substantially equal to the characteristic impedance of the cable 204 in magnitude. Accordingly, in a case in which the characteristic impedance of the cable 204 is approximately 75 [Ω], the resistance value of the termination resistor 240 is also approximately 75 [Ω].

The ultrasonic transducer 201 in the second embodiment includes a resistor element 250 in addition to the piezoelectric element 10, the parallel circuit 20, and the cut-off circuit 30. Configurations of the piezoelectric element 10, the parallel circuit 20, and the cut-off circuit 30 are similar to those in the first embodiment. The resistor element 250 is an example of a "combining resistor element" in the claims.

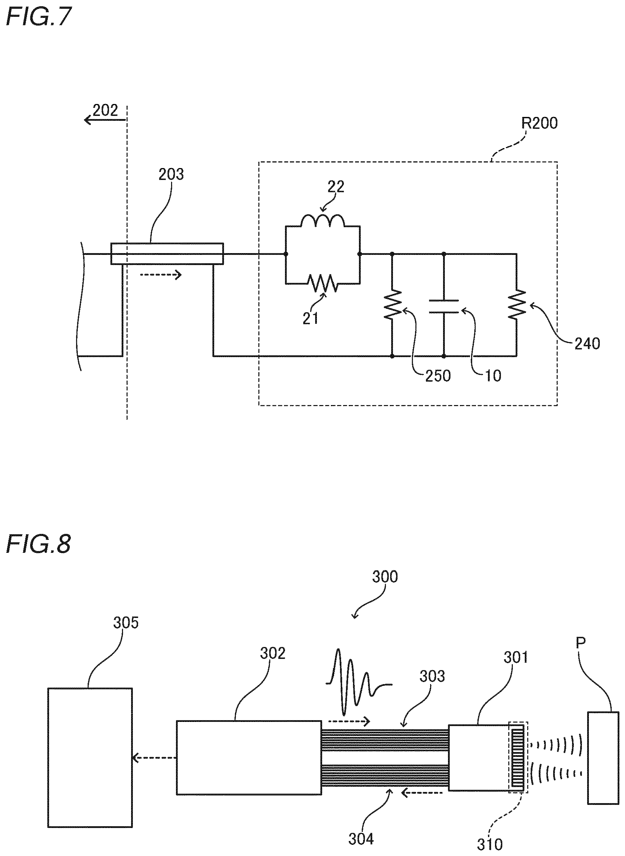

In the second embodiment, the resistor element 250 is connected in parallel to the piezoelectric element 10 on the input side of the piezoelectric element 10. Specifically, the resistor element 250 is connected in parallel to the piezoelectric element 10 on the input side with respect to the cut-off circuit 30. In the second embodiment, a constant-resistance circuit (a part indicated by a dotted box R200 in FIG. 7) is formed by a combined resistance of the resistor element 250 and an output impedance (termination resistor 240) together with the piezoelectric element 10 and the parallel circuit 20 in transmission of ultrasonic waves.

As shown in FIG. 7, in the transmission of ultrasonic waves (in the input of the detection signals), the cut-off circuit 30 can be considered as a conductor similar to the first embodiment. The cable 204 is terminated by the termination resistor 240. Accordingly, a circuit equivalent to the circuit in FIG. 6 in the transmission of the ultrasonic waves can be represented by a circuit diagram shown in FIG. 7.

Because the cut-off circuit 30 can be considered as a conductor in the transmission of the ultrasonic waves, the termination resistor 240 and the resistor element 250 in the second embodiment are connected in parallel to each other in the equivalent circuit in the transmission of the ultrasonic waves, and can be represented by a part indicated by the dotted box R200 in FIG. 7. The combined resistance of the termination resistor 240 and the resistor element 250, which are connected in parallel to each other in the part indicated by the dotted box R200 in FIG. 7, is substantially equal to the characteristic impedance of the cable 203 (approximately 50 [Ω]). Specifically, the resistance value of the termination resistor 240 is approximately 75 Ω, which is substantially equal to the characteristic impedance of the cable 204, and the resistor element 250 has a resistance value of approximately 150 Ω so that the combined resistance of the termination resistor 240 and the resistor element 250 becomes approximately 50 Ω. Because the resistance value of the resistor element 21 in the parallel circuit 20 is approximately 50 Ω, and the combined resistance of the termination resistor 240 and the resistor element 250 is also approximately 50 Ω, the piezoelectric element 10 and the inductor 22 are said to be inverse in the resistance value R (50 Ω) similar to the first embodiment. Accordingly, a constant-resistance circuit similar to the part indicated by the dotted box R100 in FIG. 3 in the first embodiment can be formed in the part indicated by the dotted box R200 in FIG. 7. In other words, in the ultrasonic transducer 201 according to the second embodiment, the constant-resistance circuit a combined impedance of which is substantially equal to the characteristic impedance of the cable 203 is constructed of the piezoelectric element 10, the parallel circuit 20, the resistor element 250, and an output impedance (termination resistor 240).

Consequently, an ultrasonic transducer 201 side becomes substantially equivalent to a pure resistor of 50 [Ω] from the viewpoint of the pulser receiver 202 side (cable 203 side). In other words, similar to the ultrasonic inspection system 100 according to the first embodiment, the ultrasonic inspection system 200 is configured to input the input waves to the ultrasonic transducer 201 through the cable 203 while impedance matching for the cable 203 is performed.

In the reception of ultrasonic waves (in the output of the detection signals), similar to the first embodiment, the detection signals are cut off by the cut-off circuit 30 so that a part provided on the input side with respect to the cut-off circuit 30 is electrically separated. Consequently, from the viewpoint of the piezoelectric element 10 side, the pulser receiver 202 side is equivalent to the circuit that includes a pure resistor of 75 Ω (termination resistor 240) connected to the piezoelectric element 10 side. In other words, similar to the ultrasonic inspection system 100 according to the first embodiment, the ultrasonic inspection system 200 is configured to output the detection signals from the ultrasonic transducer 201 to the pulser receiver 202 without passing the detection signals through the parallel circuit 20 while impedance matching for the cable 204 is performed.

The other configuration of the second embodiment is similar to the configuration of the first embodiment.

### [Advantages of Second Embodiment]

In the second embodiment, the following advantages are obtained.

In the second embodiment, as described above, the resistor element 250 (combining resistor element) is included in the constant-resistance circuit in addition to the piezoelectric element 10 and the parallel circuit 20, and connected in parallel to the piezoelectric element 10. Also, the piezoelectric element 10 is configured to output the detection signals to the pulser receiver 202 (ultrasonic transceiver) through the cable 204 (output transmission path) a characteristic impedance of which is greater than the characteristic impedance of the cable 203 (input transmission path) in magnitude. Also, the constant-resistance circuit, which includes the piezoelectric element 10, the parallel circuit 20 and the resistor element 250, has a combined impedance substantially equal to the characteristic impedance of the cable 203. Accordingly, the constant-resistance circuit constructed of the piezoelectric element 10, the parallel circuit 20 and the combining resistor element 250 can perform impedance matching in transmission of ultrasonic waves (in the input of the detection signals), while the detection signals can be output through the cable 204 having a characteristic impedance greater than the cable 203 without passing through the parallel circuit 20 in reception of ultrasonic waves (in the output of the detection signals). Accordingly, in addition to an advantage in which insertion loss occurs only in the input of the signals in the parallel circuit 20, the reduction of the intensity of the detection signals from the piezoelectric element 10 caused by the cable 204 can be suppressed by the characteristic impedance of the cable 204 greater than the cable 203. Consequently, because detection sensitivity of the detection signals from the piezoelectric element 10 can be further increased, it is possible to further suppress the reduction of the intensity of the detection signals.

The other advantages of the second embodiment are similar to the first embodiment.

### [Third embodiment]

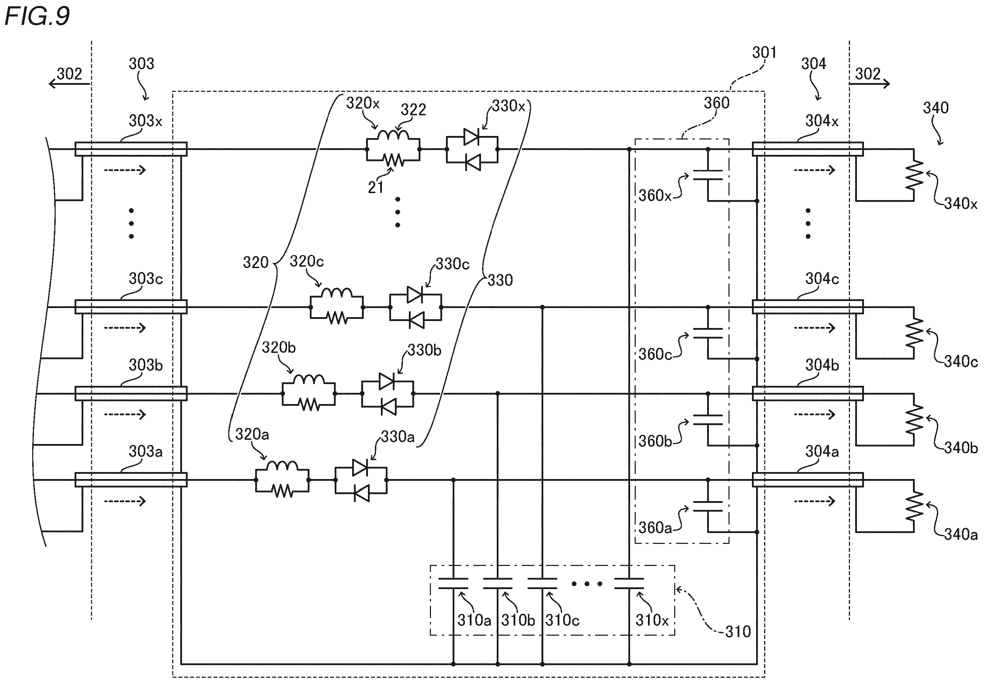

The following description describes configurations of an ultrasonic inspection system 300 and an ultrasonic transducer 301 according to a third embodiment with reference to FIGS. 8 and **9****.** In the third embodiment, the ultrasonic transducer 301 includes a plurality of piezoelectric elements 310 dissimilar to the first embodiment in which the ultrasonic transducer 101 includes one piezoelectric element 10. The same components as those of the first embodiment are denoted by the same reference numerals, and their description is omitted.

As shown in FIG. 8, the ultrasonic inspection system 300 according to the third embodiment includes an ultrasonic transducer 301, a pulser receiver 302, cables 303, cables 304 and an analyzer 305. The pulser receiver 302 is an example of an "ultrasonic transceiver" in the claims. Also, the cables 303 and the cables 304 are examples of a "plurality of input transmission paths" and a "plurality of output transmission paths", respectively, in the claims.

In the third embodiment, the ultrasonic transducer 301 includes the plurality of piezoelectric elements 310, as shown in FIG. 9. Specifically, the ultrasonic transducer 301 includes piezoelectric elements 310a, 310b, 310c, ... , 310x as the plurality of piezoelectric elements 310. For example, the number of the piezoelectric elements 310 is 64. Each of the plurality of piezoelectric elements 310 is configured to produce ultrasonic waves in accordance with the input waves (transmission pulses) input from the pulser receiver 302. Each of the plurality of piezoelectric elements 310 is configured to output detection signals by detecting the reflection waves (ultrasonic echo) reflected from the inspection target P. Capacitances of the plurality of piezoelectric elements 310 are substantially equal to each other. The plurality of piezoelectric elements 310 are aligned in a straight line in the ultrasonic transducer 301. In other words, the ultrasonic transducer 301 is a linear array transducer for linearly scanning the inspection target P.

In the ultrasonic inspection system 300 and the ultrasonic transducer 301 according to the third embodiment, each of the plurality of piezoelectric elements 310 has a configuration for suppressing reduction of sensitivity of the detection signals while performing impedance matching similar to the first and second embodiments. In other words, the plurality of piezoelectric elements 310 each of which has the same configuration are combined so that the ultrasonic inspection system 300 can linearly scan the inspection target P.

Specifically, as shown in FIG. 8, the pulser receiver 302 in the third embodiment has a plurality of (64) channels corresponding to the plurality of piezoelectric elements 310. The pulser receiver 302 outputs (transmits) input waves (transmission pulses) to the plurality of piezoelectric elements 310 of the ultrasonic transducer 301 through the cables 303 by using the plurality of channels. The pulser receiver 302 then acquires (receives) the detection signals (reception pulses) from the plurality of piezoelectric elements 310 of the ultrasonic transducer 301 through the cables 304, which are provided separately from the cables 303, by using the plurality of channels. In other words, the pulser receiver 302 is configured to independently activate the plurality of piezoelectric elements 310 so as to separately acquire the detection signals from the plurality of piezoelectric elements 310. The ultrasonic transducer 301 includes connectors (not shown) through which the ultrasonic transducer is connected to the cables 303 and 304. The pulser receiver 302 outputs the detection signals from the plurality of piezoelectric elements 310 to the analyzer 305. The analyzer 305 is configured to generate a test result of the inspection target P by analyzing the detection signals from the pulser receiver 302.

As shown in FIG. 9, the cable 303 and the cable 304 includes cables 303a, 303b, 303c, ... , 303x, and cables 304a, 304b, 304c, ... , 304x, respectively, as transmission paths (signal lines) corresponding to the plurality of piezoelectric elements 310 and assigned to the piezoelectric elements 310a, 310b, 310c, ..., 310x. For example, each of a cable 303 set and a cable 304 set has a bundled structure of the plurality of (64) coaxial cables. Characteristic impedances of the plurality of coaxial cables in both the cable 303 set and the cable 304 set are substantially equal to each other, and are approximately 50 [Ω].

Also, the pulser receiver 302 includes termination resistors 340 (termination resistors 340a, 340b, 340c, ... , 340x) for impedance matching for the cables 304a, 304b, 304c, ... , 304x in the cable 304 set. Each of the termination resistors 340 has a resistance value (approximately 50 [Ω]) substantially equal to the characteristic impedance of each of the cables 304 similar to the termination resistor 40 in the first embodiment.

In the third embodiment, the ultrasonic transducer 301 includes a plurality of parallel circuits 320, a plurality of cut-off circuits 330, and a plurality of capacitors 360 corresponding to the plurality of piezoelectric elements 310. Specifically, the ultrasonic transducer 301 includes the parallel circuits 320a, 320b, 320c, ... , 320x, cut-off circuits 330a, 330b, 330c, 330x, and capacitors 360a, 360b, 360c, 360x corresponding to the piezoelectric elements 310a, 310b, 310c, ... , 310x.

Each of the plurality of parallel circuits 320 is connected to an input side of corresponding one of the plurality of piezoelectric elements 310. The plurality of parallel circuit 320 has the same configuration as each other. Specifically, each of the plurality of parallel circuits 320 includes the resistor element 21 and the inductor 322 connected in parallel to each other similar to the parallel circuit 20 in the first embodiment. The parallel circuit 320 is connected to the input side (cable 303 side) of the piezoelectric element 310. A resistance value of the resistor element 21 is approximately 50 [Ω], for example. In the ultrasonic transducer 301 according to the third embodiment, each of the constant-resistance circuits is constructed of corresponding one of the piezoelectric elements 310, corresponding one of the capacitors 360, and corresponding one of the parallel circuits 320. The constant-resistance circuit will be described later.

Each of the plurality of cut-off circuits 330 includes a pair of diodes connected in parallel to each other with polarities of the diodes being opposite to each other similar to the first embodiment. The cut-off circuit 330 is connected between the piezoelectric element 310 and the parallel circuit 320. The cut-off circuits 330 have the same configuration as each other. The cut-off circuit 330 is configured to pass the input waves through the diodes 31 and 32 when the input waves that have a voltage higher than a forward voltage of a pair of diodes are input to the diodes 31 and 32, and to cut off the detection signals when the detection signals that have a voltage lower than the forward voltage are input to the diodes 31 and 32 similar to the cut-off circuit 30 in the

### first embodiment.

Each of the plurality of capacitors 360 is connected in parallel to corresponding one of the plurality of piezoelectric elements 310. In a linear array probe, because an area of each piezoelectric element 310 is small, an impedance of the piezoelectric element 310 is likely to be high. For this reason, an influence of electromagnetic noises from the surroundings on the detection signals output from the piezoelectric element 310 will be large. To address this, although sensitivity becomes low, the impedance can be adjusted to a small value by connecting the capacitor 360 in parallel to the piezoelectric element 310.

A capacitance of each capacitor 360 is designed based on a capacitance of piezoelectric element 310, a characteristic impedance of the cable 304 on the output side, and a frequency of the input waves. For example, as for the capacitor 360x connected in parallel to the piezoelectric element 310x, which is one of the plurality of piezoelectric elements 310, a capacitance of the capacitor 360x is designed so that a combined capacitance Cₓ of the piezoelectric element 310x and the capacitor 360x is expressed by the following equation (1).
[Equation 1]$Cx = {{1 / Z}_{304}}_{ωu}$ where Z₃₀₄ is the characteristic impedance of the cable 304. The angular frequency ωᵤ is represented by 2πfᵤ. The frequency fᵤ is preferably selected from a median value a frequency band of the ultrasonic waves output from corresponding one element of the piezoelectric elements 310 to an upper limit value of the frequency band. Capacitances of the plurality of capacitors 360 are equal to each other. That is, as for the other capacitors 360, their capacitances are determined so that a combined capacitance of each capacitor and corresponding one element of the piezoelectric elements 310 is expressed by a equation similar to the aforementioned Equation (1).

### (Signal Paths in Transmission and Reception of Ultrasonic Waves)

The ultrasonic transducer 301 according to the third embodiment is configured to produce the ultrasonic waves in response to the input waves that are input from the pulser receiver 302 through the cables 303 to the piezoelectric elements 310 through the plurality of parallel circuits 320 in transmission of ultrasonic waves (in the input of the detection signals) similar to the first embodiment. The ultrasonic transducer 301 is configured to output the detection signals from the plurality of piezoelectric elements 310 to the pulser receiver 302 through the cables 304 without passing the detection signals through the plurality of parallel circuits 320 in reception of ultrasonic waves (in output of the detection signals).

Specifically, in the transmission of ultrasonic waves (in the input of the detection signals), each cut-off circuit 330 can be considered as a conductor similar to the first embodiment. The constant-resistance circuit an impedance of which is substantially equal to the characteristic impedance of the cable 303 (approximately 50 Ω) is constructed of the parallel circuit 320, the piezoelectric element 310, the capacitor 360, and an output impedance (termination resistor 340). In other words, a combined circuit of each of the plurality of piezoelectric elements 310 and each of the plurality of the capacitors 360, and each of the plurality of the inductors 322 are said to be inverse in a resistance value R (50 Ω).

More specifically, in the transmission of the ultrasonic waves, the ultrasonic transducer 301 is designed so that a product of a combined impedance of each piezoelectric element 310 and each capacitor 360, and the impedance of each inductor 322 is a square of the characteristic impedance of each cable 303 (a product of a resistance of each resistor element 21 and a resistance of each termination resistor 340). Accordingly, similar to the ultrasonic inspection system 100 according to the first embodiment, the ultrasonic inspection system 300 is configured to individually input the input waves to each piezoelectric element 310 of the ultrasonic transducer 301 through each cable 303 while impedance matching for each cable 303 is performed.

In the reception of ultrasonic waves (in the output of the detection signals), similar to the first embodiment, the detection signals are cut off by each cut-off circuit 330 so that a part provided on the input side with respect to the cut-off circuit 330 is electrically separated. As a result, similar to the ultrasonic inspection system 100 according to the first embodiment, the ultrasonic inspection system 300 is configured to output the detection signals from each piezoelectric element 310 of the ultrasonic transducer 301 to the pulser receiver 302 without passing the detection signals through the parallel circuit 320 while impedance matching for each cable 304 is performed by each termination resistor 340.

The other configuration of the third embodiment is similar to the configuration of the first embodiment.

### [Advantages of Third Embodiment]

In the third embodiment, the following advantages are obtained.

In the third embodiment, as described above, a plurality of piezoelectric elements 310 are provided; a plurality of parallel circuits 320 are provided so that the plurality of parallel circuits are connected to input sides of the plurality of piezoelectric elements 310 one by one; and the ultrasonic transducer is configured to produce the ultrasonic waves in response to the input waves that are input from the pulser receiver 302 (ultrasonic transceiver) through each of the cables 303 (each of a plurality of input transmission paths) that correspond to the plurality of piezoelectric elements 310 to corresponding one of the plurality of piezoelectric elements 310 through each of the plurality of parallel circuits 320, and to output the detection signals from the corresponding one of the plurality of piezoelectric elements 310 to the pulser receiver 302 through each of a plurality of cables 304 (output transmission paths) that correspond to the plurality of piezoelectric elements 310 without passing the detection signals through corresponding one of the plurality of parallel circuits 320. Accordingly, even in a case in which a plurality of piezoelectric elements 310 are provided, the input waves can be input to the piezoelectric element 310 through each of the parallel circuits 320, which are included in the constant-resistance circuits for impedance matching, while the detection signals from each of the plurality of piezoelectric elements 310 can be output without passing through the parallel circuit 320, which includes the resistor element 21 and the inductor 322. Consequently, a wide area of the inspection target P can be collectively inspected by the plurality of piezoelectric elements 310 provided, and the reduction of the intensity of the detection signals output from each of the plurality of piezoelectric elements 310 can be suppressed.

In addition, in the third embodiment, a plurality of capacitors 360 each of which is connected in parallel to corresponding one of the plurality of piezoelectric elements 310 are provided. Accordingly, even in a case in which areas of the plurality of piezoelectric elements 310 are small so that their impedances are relatively large, each combined impedance can be reduced by each capacitor 360 connected in parallel to each piezoelectric element 310, and as a result it is possible to reduce influences of electromagnetic noises from the surroundings on the detection signals output from the piezoelectric elements 310. The other advantages of the third embodiment are similar to the first and second embodiments.

### [Modified Embodiments]

Note that the embodiment disclosed this time must be considered as illustrative in all points and not restrictive. The scope of the present invention is not shown by the above description of the embodiments but by the scope of claims for patent, and all modifications within the meaning and scope equivalent to the scope of claims for patent are further included.

For example, in the first and third embodiments, the constant-resistance circuit is designed so that resistances of both the termination resistor 40 (340) and the resistor element 21 of the parallel circuit 20 (320) are equal to characteristic impedances of the cable 103, 303 (input transmission path), and a product of an impedance of the piezoelectric element 10 (310) and an impedance the inductor 22 (322) of the parallel circuit 20 (320) is substantially equal to a square of a characteristic impedance of cable 103, 303 has been shown in the aforementioned embodiment, the present invention is not limited to this. Alternatively, in the present invention, a constant-resistance circuit can be constructed by connecting an additional capacitor or inductor in series or parallel to the piezoelectric element. In other words, when a piezoelectric element is represented by an equivalent circuit including a capacitor and a series resonant circuit, a constant-resistance circuit can be constructed by additionally providing a structure that is the inverse of the series resonant circuit that constructs the piezoelectric element.

While the example in which the cable 103 or 203 (input transmission path), and the cable 104 or 204 (output transmission path) are separate coaxial cables has been shown in the aforementioned first and second embodiments, the present invention is not limited to this. For example, an input transmission path and an output transmission path can be included in a single cable. In other words, a single cable can include two signal lines as the input transmission path and the output transmission path. While the example in which the cables 303 (a plurality of transmission input paths) and the cables 304 (a plurality of output transmission paths) are separate cables has been shown in the aforementioned third embodiment, the present invention is not limited to this. For example, signal lines that are the plurality of input transmission paths, and signal lines that are the plurality of output transmission paths can be collectively included in a single cable.

While the example in which the ultrasonic transducer 101 (201, 301), the cable(s) 103, 203, 303 (input transmission path, a plurality of input transmission paths), and the cable(s) 104, 204, 304 (output transmission path, a plurality of output transmission paths) are separately constructed from each other, and connected to each other by the connectors has been shown in the aforementioned first to third embodiments, the present invention is not limited to this. For example, the ultrasonic transducer and the cables (input and output transmission paths) can be integrally constructed.

While the example in which the piezoelectric element 10 (310) has a structure including a piezoelectric piece (piezoelectric material) of a polymeric material has been shown in the aforementioned first to third embodiments, the present invention is not limited to this. For example, the piezoelectric piece of the piezoelectric element can be formed of a ceramic material.

While the example in which the ultrasonic transducer 101 (201, 301) includes both the piezoelectric element 10 (310) and the parallel circuit 20 (320) has been shown in the aforementioned first to third embodiments, the present invention is not limited to this. For example, the parallel circuit that forms the constant-resistance circuit together with the piezoelectric element can be separately provided from the ultrasonic transducer, and the impedance matching for the input transmission path can be performed by connecting the parallel circuit between the input transmission path and the ultrasonic transducer by using a connector, etc. Also, the cut-off circuit 30 can be provided separately from the ultrasonic transducer.

While the example in which the cut-off circuit 30 is constructed of the pair of diodes 31 and 32 has been shown in the aforementioned first to third embodiments, the present invention is not limited to this. For example, the cut-off circuit can be constructed of a solid-state relay, a semiconductor switch using gallium arsenide, a high-speed high-voltage semiconductor switch, etc. In this case, a control signal is additionally provided to switch between connection statuses of a status in transmission of ultrasonic waves (in input of detection signals) and a status in reception of ultrasonic waves (in output of the detection signals) so as to switch between passage and cut-off statuses of the cut-off circuit.

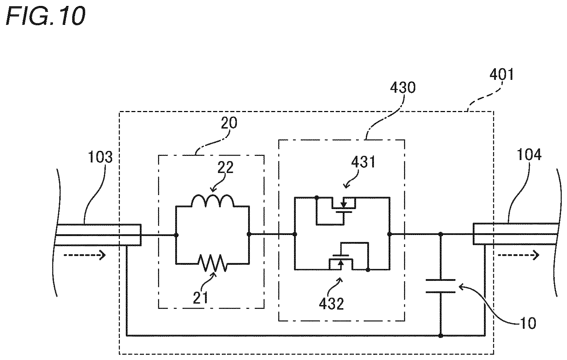

Alternatively, a cut-off circuit 430 can be constructed of a pair of FETs 431 and 432 (field effect transistors), as shown in an ultrasonic transducer 401 according to a modified embodiment shown in FIG. 10. In the cut-off circuit 430 in this modified embodiment, the pair of FETs 431 and 432 are connected in parallel to each other with their polarities being opposite to each other. Connection between their drain terminal and their gate terminal (diode connection) allows the pair of FETs 431 and 432 to serve the cut-off circuit similar to the pair of diodes 31 and 32 in the first embodiment. Similarly, the cut-off circuit can be constructed of transistors whose collector and base terminals are connected to each other (or a Darlington transistor).

While the example in which the ultrasonic transducer 301 is a linear array transducer including a plurality of piezoelectric elements 310 aligned in a straight line has been shown in the aforementioned third embodiment, the present invention is not limited to this. For example, the ultrasonic transducer can be a multi-array transducer including a plurality of piezoelectric elements arranged in a grid shape (in a plane).

While the example in which the ultrasonic transducer 301 includes a plurality of capacitors 360 each of which is connected in parallel to corresponding one of the plurality of piezoelectric elements 310 has been shown in the aforementioned third embodiment, the present invention is not limited to this. For example, in a case in which the plurality of piezoelectric elements are provided, no capacitors that are connected in parallel to the piezoelectric elements can be provided. Also, in a case in which only one piezoelectric element is provided similar to the first and second embodiments, the capacitor can be connected in parallel to the piezoelectric element.

While the example in which capacitances of the plurality of piezoelectric elements 310 are substantially equal to each other has been shown in the aforementioned third embodiment, the present invention is not limited to this. For example, the plurality of piezoelectric elements 310 can have different capacitances from each other. In this case, as for the parallel circuits connected to input sides of the plurality of piezoelectric elements, the plurality of parallel circuit have configurations different from each other. Specifically, impedances of the inductors in the plurality of parallel circuits are designed to form the constant-resistance circuits according to the different capacitances of the plurality of piezoelectric elements. Although it has been illustratively described that characteristic impedances of the transmission paths (coaxial cables) of the cables 303 (plurality of input transmission paths) are substantially equal to each other in the aforementioned third embodiment, the characteristic impedances of input transmission paths can be different from each other. Also, in this case, resistance values of the resistor elements of the parallel circuits are designed according to the different characteristic impedances to perform impedance matching. The same goes for the cables 304 (a plurality of output transmission paths).

### Description of Reference Numerals

10, 310; piezoelectric element
20, 320; parallel circuit
21; resistor element
22, 322; inductor
30, 330, 430; cut-off circuit
31, 32; diode
40, 240, 340; termination resistor
100, 200, 300; ultrasonic inspection system
101, 201, 301, 401; ultrasonic transducer
102, 202, 302; pulser receiver (ultrasonic transceiver)
103, 203; cable (input transmission path)
104, 204; cable (output transmission path)
250; resistor element (combining resistor element)
303; cable (input transmission path)
304; cable (output transmission path)

## Claims

1. An ultrasonic transducer (101, 201, 301, 401) comprising:
a piezoelectric element (10, 310) configured to produce ultrasonic waves based on input waves input from an ultrasonic transceiver (102, 202, 302) and to output detection signals to the ultrasonic transceiver (102, 202, 302) by detecting the waves reflected from an inspection target;
a parallel circuit (20, 320) including a resistor element (21) and an inductor (22, 322) connected in parallel to each other, and connected to an input side of the piezoelectric element (10, 310), wherein
at least the piezoelectric element (10, 310) and the parallel circuit (20, 320) form a constant-resistance circuit, and in that
the ultrasonic waves are produced in response to the input waves that are input from the ultrasonic transceiver (102, 202, 302) through an input transmission path (103, 203, 303) to the piezoelectric element (10, 310) through the parallel circuit (20, 320), **characterized in that** the detection signals are output from the piezoelectric element (10, 310) to the ultrasonic transceiver (102, 202, 302) through an output transmission path (104, 204, 304) that is different from the input transmission path (103, 203, 303) without passing through the parallel circuit (20, 320).

2. The ultrasonic transducer (101, 201, 301, 401) according to claim 1 further comprising a cut-off circuit (30, 330, 430) connected between the piezoelectric element (10, 310) and the parallel circuit (20, 320), wherein
the cut-off circuit (30, 330, 430) is configured to pass the input waves through the parallel circuit (20, 320) so as to input the input waves from the ultrasonic transceiver (102, 202, 302) to the piezoelectric element (10, 310), and to cut off the detection signals so as to output the detection signals from the piezoelectric element (10, 310) to the ultrasonic transceiver (102, 202, 302) without passing the detection signals through the parallel circuit (20, 320).

3. The ultrasonic transducer (101, 201, 301, 401) according to claim 2, wherein
the cut-off circuit (30, 330, 430) includes a pair of diodes (31, 32) connected in parallel to each other with polarities of the diodes being opposite to each other; and
forward voltages of the pair of diodes (31, 32) are substantially equal to each other in magnitude.

4. The ultrasonic transducer (101, 201, 301, 401) according to any of claims 1 to 3, wherein
the piezoelectric element (10, 310) is connected in parallel to a termination resistor (40, 240, 340) that is provided on the ultrasonic transceiver (102, 202, 302) side for impedance matching for the output transmission path (104, 204, 304), and is configured to output the detection signals to the ultrasonic transceiver (102, 202, 302) through the output transmission path (104, 204, 304); and
a product of an impedance of the piezoelectric element (10, 310) and an impedance of the inductor (22, 322) in the parallel circuit (20, 320) is substantially equal to a square of a characteristic impedance of the input transmission path (103 ,203, 303).

5. The ultrasonic transducer (101, 201, 301, 401) according to any of claims 1 to 4, wherein
the piezoelectric element (10, 310) is configured to output the detection signals to the ultrasonic transceiver (102, 202, 302) through the output transmission path (104, 204, 304) a characteristic impedance of which is substantially equal to a/the characteristic impedance of the input transmission path (103, 203, 303) in magnitude; and
the constant-resistance circuit, which is formed of at least the piezoelectric element (10, 310) and the parallel circuit (20, 320), has a combined impedance substantially equal to the characteristic impedance of the input transmission path.

6. The ultrasonic transducer (101, 201, 301, 401) according to any of claims 1 to 4 further comprising a combining resistor element (250) included in the constant-resistance circuit in addition to the piezoelectric element (10, 310) and the parallel circuit (20, 320), and connected in parallel to the piezoelectric element (10, 310), wherein
the piezoelectric element (10, 310) is configured to output the detection signals to the ultrasonic transceiver (102, 202, 302) through the output transmission path (104, 204, 304) a characteristic impedance of which is greater than a/the characteristic impedance of the input transmission path; and
the constant-resistance circuit, which includes the piezoelectric element (10, 310), the parallel circuit (20, 320) and the combining resistor element (21), has a combined impedance substantially equal to the characteristic impedance of the input transmission path.

7. The ultrasonic transducer (101, 201, 301, 401) according to any of claims 1 to 6 further comprising a plurality of piezoelectric elements as the piezoelectric element (10, 310), wherein
a plurality of parallel circuits are provided as the parallel circuit (20, 320) so that the plurality of parallel circuits are connected to input sides of the plurality of piezoelectric elements one by one; and
the ultrasonic waves are produced in response to the input waves that are input from the ultrasonic transceiver (102, 202, 302) through each of a plurality of input transmission paths that are provided as the input transmission path (103, 203, 303) and correspond to the plurality of piezoelectric elements to corresponding one of the plurality of piezoelectric elements through each of the plurality of parallel circuits, and the detection signals are output from the corresponding one of the plurality of piezoelectric elements to the ultrasonic transceiver (102, 202, 302) through each of a plurality of output transmission path (104, 204, 304)s that are provided as the output transmission path (104, 204, 304) and correspond to the plurality of piezoelectric elements without passing the detection signals through corresponding one of the plurality of parallel circuits.

8. An ultrasonic inspection system comprising:
an ultrasonic transducer (101, 201, 301, 401) (101, 201, 301, 401) according to claim 1 an input transmission path (103, 203, 303) configured to transmit the input waves to the ultrasonic transducer (101, 201, 301, 401);
an output transmission path (104, 204, 304) provided separately from the input transmission path, and configured to output the detection signals output from the ultrasonic transducer (101, 201, 301, 401); and
an ultrasonic transceiver (102, 202, 302) configured to output the input waves to the ultrasonic transducer (101, 201, 301, 401) through the input transmission path, and to acquire the detection signals from the ultrasonic transducer (101, 201, 301, 401) through the output transmission path (104,204,304).

## Patentansprüche

1. Ultraschallwandler (101, 201, 301, 401) umfassend:
ein piezoelektrisches Element (10, 310), das ausgestaltet ist, um Ultraschallwellen basierend auf Eingangswellen zu erzeugen, die von einem Ultraschall-Transceiver (102, 202, 302) eingegeben werden, und um Detektionssignale an den Ultraschall-Transceiver (102, 202, 302) auszugeben, indem die von einem Prüfobjekt reflektierten Wellen erfasst werden;
eine Parallelschaltung (20, 320), die ein Widerstandselement (21) und eine Induktivität (22, 322) aufweist, die parallel zueinander geschaltet sind und mit einer Eingangsseite des piezoelektrischen Elements (10, 310) verbunden sind, wobei zumindest das piezoelektrische Element (10, 310) und die Parallelschaltung (20, 320) eine Konstantwiderstandschaltung bilden, und
wobei die Ultraschallwellen als Reaktion auf die Eingangswellen erzeugt werden, die von dem Ultraschall-Transceiver (102, 202, 302) über einen Eingangsübertragungspfad (103, 203, 303) durch die Parallelschaltung (20, 320) zu dem piezoelektrischen Element (10, 310) eingegeben werden,
**dadurch gekennzeichnet,**
**dass** die Detektionssignale von dem piezoelektrischen Element (10, 310) über einen Ausgangsübertragungspfad (104, 204, 304), der sich von dem Eingangsübertragungspfad (103, 203, 303) unterscheidet, an den Ultraschall-Transceiver (102, 202, 302) ausgegeben werden, ohne die Parallelschaltung (20, 320) zu durchlaufen.

2. Ultraschallwandler (101, 201, 301, 401) nach Anspruch 1, ferner umfassend eine Abschaltschaltung (30, 330, 430), die zwischen dem piezoelektrischen Element (10, 310) und der Parallelschaltung (20, 320) geschaltet ist, wobei die Abschaltschaltung (30, 330, 430) ausgestaltet ist, um die Eingangswellen durch die Parallelschaltung (20, 320) zu leiten, um die Eingangswellen von dem Ultraschall-Transceiver (102, 202, 302) in das piezoelektrische Element (10, 310) einzugeben, und um die Detektionssignale abzuschalten, um die Detektionssignale von dem piezoelektrischen Element (10, 310) an den Ultraschall-Transceiver (102, 202, 302) auszugeben, ohne die Detektionssignale durch die Parallelschaltung (20, 320) zu leiten.

3. Ultraschallwandler (101, 201, 301, 401) nach Anspruch 2, wobei
die Abschaltschaltung (30, 330, 430) ein Paar von Dioden (31, 32) aufweist, die parallel zueinander geschaltet sind, wobei die Polaritäten der Dioden einander entgegengesetzt sind; und
Durchlassspannungen des Paars von Dioden (31, 32) in ihrer Größe im Wesentlichen gleich sind.

4. Ultraschallwandler (101, 201, 301, 401) nach einem der Ansprüche 1 bis 3, wobei
das piezoelektrische Element (10, 310) parallel zu einem Abschlusswiderstand (40, 240, 340) geschaltet ist, der auf der Seite des Ultraschall-Transceivers (102, 202, 302) zur Impedanzanpassung für den Ausgangsübertragungspfad (104, 204, 304) vorhanden ist, und ausgestaltet ist, um die Detektionssignale über den Ausgangsübertragungspfad (104, 204, 304) an den Ultraschall-Transceiver (102, 202, 302) auszugeben; und
ein Produkt aus einer Impedanz des piezoelektrischen Elements (10, 310) und einer Impedanz der Induktivität (22, 322) in der Parallelschaltung (20, 320) im Wesentlichen gleich einem Quadrat einer charakteristischen Impedanz des Eingangsübertragungspfads (103, 203, 303) ist.

5. Ultraschallwandler (101, 201, 301, 401) nach einem der Ansprüche 1 bis 4, wobei
das piezoelektrische Element (10, 310) ausgestaltet ist, um die Detektionssignale über den Ausgangsübertragungspfad (104, 204, 304), dessen charakteristische Impedanz im Wesentlichen gleich der charakteristischen Impedanz des Eingangsübertragungspfads (103, 203, 303) ist, an den Ultraschall-Transceiver (102, 202, 302) auszugeben; und
die Konstantwiderstandschaltung, die zumindest aus dem piezoelektrischen Element (10, 310) und der Parallelschaltung (20, 320) gebildet ist, eine Gesamtimpedanz aufweist, die im Wesentlichen gleich der charakteristischen Impedanz des Eingangsübertragungspfads ist.

6. Ultraschallwandler (101, 201, 301, 401) nach einem der Ansprüche 1 bis 4, ferner umfassend ein Kombinationswiderstandselement (250), das in der Konstantwiderstandschaltung zusätzlich zu dem piezoelektrischen Element (10, 310) und der Parallelschaltung (20, 320) enthalten ist und parallel zu dem piezoelektrischen Element (10, 310) geschaltet ist, wobei
das piezoelektrische Element (10, 310) ausgestaltet ist, um die Detektionssignale über den Ausgangsübertragungspfad (104, 204, 304), dessen charakteristische Impedanz größer als die charakteristische Impedanz des Eingangsübertragungspfads ist, an den Ultraschall-Transceiver (102, 202, 302) auszugeben; und
die Konstantwiderstandschaltung, die das piezoelektrische Element (10, 310), die Parallelschaltung (20, 320) und das Kombinationswiderstandselement (21) enthält, eine Gesamtimpedanz aufweist, die im Wesentlichen gleich der charakteristischen Impedanz des Eingangsübertragungspfads ist.

7. Ultraschallwandler (101, 201, 301, 401) nach einem der Ansprüche 1 bis 6, ferner umfassend mehrere piezoelektrische Elemente als das piezoelektrische Element (10, 310), wobei
mehrere Parallelschaltungen als die Parallelschaltung (20, 320) vorhanden sind, so dass die mehreren Parallelschaltungen jeweils einzeln mit den Eingangsseiten der mehreren piezoelektrischen Elemente verbunden sind; und
die Ultraschallwellen als Reaktion auf die Eingangswellen erzeugt werden, die von dem Ultraschall-Transceiver (102, 202, 302) über jeden von mehreren Eingangsübertragungspfaden, die als der Eingangsübertragungspfad (103, 203, 303) vorhanden sind und mit den mehreren piezoelektrischen Elementen korrespondieren, in ein entsprechendes der mehreren piezoelektrischen Elemente über jede der mehreren Parallelschaltungen eingegeben werden, und die Detektionssignale von dem entsprechenden der mehreren piezoelektrischen Elemente an den Ultraschall-Transceiver (102, 202, 302) über einen jeweiligen von mehreren Ausgangsübertragungspfaden (104, 204, 304), die als der Ausgangsübertragungspfad (104, 204, 304) vorhanden sind und mit den mehreren piezoelektrischen Elementen korrespondieren, ausgegeben werden, ohne die Detektionssignale durch eine entsprechende der mehreren Parallelschaltungen zu leiten.

8. Ultraschallprüfsystem umfassend:
einen Ultraschallwandler (101, 201, 301, 401) nach Anspruch 1,
einen Eingangsübertragungspfad (103, 203, 303), der ausgestaltet ist, um die Eingangswellen an den Ultraschallwandler (101, 201, 301, 401) zu übertragen;
einen Ausgangsübertragungspfad (104, 204, 304), der getrennt von dem Eingangsübertragungspfad vorhanden ist und ausgestaltet ist, um die von dem Ultraschallwandler (101, 201, 301, 401) ausgegebenen Detektionssignale auszugeben; und
einen Ultraschall-Transceiver (102, 202, 302), der ausgestaltet ist, um die Eingangswellen über den Eingangsübertragungspfad an den Ultraschallwandler (101, 201, 301, 401) auszugeben und um die Detektionssignale von dem Ultraschallwandler (101, 201, 301, 401) über den Ausgangsübertragungspfad (104, 204, 304) zu erfassen.

## Revendications

1. Transducteur ultrasonique (101, 201, 301, 401) comprenant :
un élément piézoélectrique (10, 310) configuré pour produire des ondes ultrasoniques sur la base d'ondes d'entrée introduites depuis un émetteur-récepteur ultrasonique (102, 202, 302) et pour émettre des signaux de détection vers l'émetteur-récepteur ultrasonique (102, 202, 302) en détectant les ondes réfléchies par une cible d'inspection ;
un circuit parallèle (20, 320) incluant un élément résistif (21) et une inductance (22, 322) connectés en parallèle l'un à l'autre, et connecté à un côté d'entrée de l'élément piézoélectrique (10, 310), dans lequel
au moins l'élément piézoélectrique (10, 310) et le circuit parallèle (20, 320) forment un circuit à résistance constante, et en ce que
les ondes ultrasoniques sont produites en réponse aux ondes d'entrée qui sont introduites depuis l'émetteur-récepteur ultrasonique (102, 202, 302) via un chemin de transmission d'entrée (103, 203, 303) vers l'élément piézoélectrique (10, 310) via le circuit parallèle (20, 320),
**caractérisé en ce que** les signaux de détection sont émis depuis l'élément piézoélectrique (10, 310) vers l'émetteur-récepteur ultrasonique (102, 202, 302) via un chemin de transmission de sortie (104, 204, 304) qui est différent du chemin de transmission d'entrée (103, 203, 303) sans passer via le circuit parallèle (20, 320).

2. Transducteur ultrasonique (101, 201, 301, 401) selon la revendication 1, comprenant en outre un circuit de coupure (30, 330, 430) connecté entre l'élément piézoélectrique (10, 310) et le circuit parallèle (20, 320), dans lequel
le circuit de coupure (30, 330, 430) est configuré pour faire passer les ondes d'entrée via le circuit parallèle (20, 320) de manière à introduire les ondes d'entrée depuis l'émetteur-récepteur ultrasonique (102, 202, 302) vers l'élément piézoélectrique (10, 310), et à couper les signaux de détection de manière à émettre les signaux de détection depuis l'élément piézoélectrique (10, 310) vers l'émetteur-récepteur ultrasonique (102, 202, 302) sans faire passer les signaux de détection via le circuit parallèle (20, 320).

3. Transducteur ultrasonique (101, 201, 301, 401) selon la revendication 2, dans lequel
le circuit de coupure (30, 330, 430) inclut une paire de diodes (31, 32) connectées en parallèle l'un à l'autre, les polarités des diodes étant opposées l'une à l'autre ; et
les tensions directes de la paire de diodes (31, 32) sont sensiblement égales l'une à l'autre en valeur absolue.

4. Transducteur ultrasonique (101, 201, 301, 401) selon l'une quelconque des revendications 1 à 3, dans lequel
l'élément piézoélectrique (10, 310) est connecté en parallèle à une résistance de terminaison (40, 240, 340) prévue du côté de l'émetteur-récepteur ultrasonique (102, 202, 302) pour l'adaptation d'impédance pour le chemin de transmission de sortie (104, 204, 304), et est configuré pour émettre les signaux de détection vers l'émetteur-récepteur ultrasonique (102, 202, 302) via le chemin de transmission de sortie (104, 204, 304) ; et
un produit d'une impédance de l'élément piézoélectrique (10, 310) et d'une impédance de l'inductance (22, 322) dans le circuit parallèle (20, 320) est sensiblement égal à un carré de l'impédance caractéristique du chemin de transmission d'entrée (103, 203, 303).

5. Transducteur ultrasonique (101, 201, 301, 401) selon l'une quelconque des revendications 1 à 4, dans lequel
l'élément piézoélectrique (10, 310) est configuré pour émettre les signaux de détection vers l'émetteur-récepteur ultrasonique (102, 202, 302) via le chemin de transmission de sortie (104, 204, 304) dont une impédance caractéristique est sensiblement égale en grandeur à une/l'impédance caractéristique du chemin de transmission d'entrée (103, 203, 303) ; et
le circuit à résistance constante, qui est formé d'au moins l'élément piézoélectrique (10, 310) and du circuit parallèle (20, 320), a une impédance combinée sensiblement égale à l'impédance caractéristique du chemin de transmission d'entrée.

6. Transducteur ultrasonique (101, 201, 301, 401) selon l'une quelconque des revendications 1 à 4, comprenant en outre un élément résistif de combinaison (250) inclus dans le circuit à résistance constante en plus de l'élément piézoélectrique (10, 310) et du circuit parallèle (20, 320), et connecté en parallèle à l'élément piézoélectrique (10, 310), dans lequel
l'élément piézoélectrique (10, 310) est configuré pour émettre les signaux de détection vers l'émetteur-récepteur ultrasonique (102, 202, 302) via le chemin de transmission de sortie (104, 204, 304), dont une impédance caractéristique est supérieure à une/l'impédance caractéristique du chemin de transmission d'entrée ; et
le circuit à résistance constante, qui inclut l'élément piézoélectrique (10, 310), le circuit parallèle (20, 320) et l'élément résistif de combinaison (21), a une impédance combinée sensiblement égale à l'impédance caractéristique du chemin de transmission d'entrée.

7. Transducteur ultrasonique (101, 201, 301, 401) selon l'une quelconque des revendications 1 à 6, comprenant en outre une pluralité d'éléments piézoélectriques en tant qu'élément piézoélectrique (10, 310), dans lequel
une pluralité de circuits parallèles sont prévus en tant que circuit parallèle (20, 320) de sorte que la pluralité de circuits parallèles soient connectés à des côtés d'entrée de la pluralité d'éléments piézoélectriques un par un ; et
les ondes ultrasoniques sont produites en réponse aux ondes d'entrée qui sont introduites depuis l'émetteur-récepteur ultrasonique (102, 202, 302) via chacun d'une pluralité de chemins de transmission d'entrée qui sont prévus en tant que chemin de transmission d'entrée (103, 203, 303) et correspondent à la pluralité d'éléments piézoélectriques vers l'un correspondant de la pluralité d'éléments piézoélectriques via chacun de la pluralité de circuits parallèles, et les signaux de détection sont émis depuis l'un correspondant de la pluralité d'éléments piézoélectriques vers l'émetteur-récepteur ultrasonique (102, 202, 302) via chacun d'une pluralité de chemins de transmission de sortie (104, 204, 304) qui sont prévus en tant que chemin de transmission de sortie (104, 204, 304) et correspondent à la pluralité d'éléments piézoélectriques sans faire passer les signaux de détection via l'un correspondant de la pluralité de circuits parallèles.

8. Système d'inspection ultrasonique comprenant :
un transducteur ultrasonique (101, 201, 301, 401) selon la revendication 1
un chemin de transmission d'entrée (103, 203, 303) configuré pour transmettre les ondes d'entrée vers le transducteur ultrasonique (101, 201, 301, 401) ;
un chemin de transmission de sortie (104, 204, 304) prévu séparément du chemin de transmission d'entrée, et configuré pour émettre les signaux de détection émis depuis le transducteur ultrasonique (101, 201, 301, 401) ; et
un émetteur-récepteur ultrasonique (102, 202, 302) configuré pour émettre les ondes d'entrée vers le transducteur ultrasonique (101, 201, 301, 401) via le chemin de transmission d'entrée, et pour acquérir les signaux de détection depuis le transducteur ultrasonique (101, 201, 301, 401) via le chemin de transmission de sortie (104, 204, 304).
